Europäisches Patentamt

(19) European Patent Office

Office européen des brevets

11
(11) Numéro de publication: **0 000 084**

**B1**

(12) **FASCICULE DE BREVET EUROPEEN**

(45) Date de publication du fascicule du brevet: **20.11.86**

(21) Numéro de dépôt: **78200028.5**

(22) Date de dépôt: **01.06.78**

(51) Int. Cl.⁴: **C 08 L 23/02** // C08K3/22

(54) **Utilisation de composition d'alpha-polyoléfines pour l'extrusion.**

(30) Priorité: **07.06.77 FR 7717978**

(43) Date de publication de la demande:
**20.12.78 Bulletin 78/01**

(45) Mention de la délivrance du brevet:
**20.11.86 Bulletin 86/47**

(84) Etats contractants désignés:
**BE CH DE FR GB LU NL SE**

(56) Documents cités:
**néant**

(73) Titulaire: **SOLVAY & Cie (Société Anonyme)**
**Rue du Prince Albert, 33**
**B-1050 Bruxelles (BE)**

(72) Inventeur: **Alard, Joseph**
**Rue Jos, Quevit, 21**
**B-5220 Andenne (BE)**
Inventeur: **Derroitte, Jean-Louis**
**Petite Hoursinne, 39**
**B-5496 Mormont (BE)**

Courier Press, Leamington Spa, England.

# 0 000 084

## Description

La présente invention concerne l'utilisation, pour l'extrusion, de compositions à base de polymères d'alpha-oléfines. Elle concerne plus particulièrement l'utilisation, pour la fabrication d'objets par extrusion suivie de refroidissement à l'eau, de compositions à base de polymères du propylène.

Les polymères d'alpha-oléfines, en particulier les polymères d'alpha-monooléfines inférieures telles que l'éthylène et le propylène sont des polymères thermoplastiques aptes à la mise en oeuvre par extrusion. Un débouché important de ce procédé de transformation réside dans la fabrication de films, feuilles, tubes et filaments. Dans le cas particulier des polymères du propylène, un volume important de ces polymères extrudés est destiné à la fabrication de fibres et de films. Ces derniers peuvent par exemple être utilisés tels quels comme films d'emballage, peuvent être découpés en bandelettes pour le tissage, ou encore peuvent être fibrillés pour diverses applications textiles.

Très souvent, l'extrusion proprement dite du polymère est suivie d'un traitement de refroidissement brusque (trempe) des objets extrudés au moyen d'eau.

Or, dans les procédés d'extrusion effectués en continu et impliquant un refroidissement ou une tremps des objets extrudés par un bain d'eau, se pose le problème de l'entraînement, par l'objet extrudé, au cours de sa progression, de quantités plus ou moins importantes d'eau de refroidissement. Cet entraînement se manifeste souvent déjà pour des vitesses d'extrusion peu élevées. La présence de cette eau est particulièrement gênante pour la suite des opérations que sont appelés à subir les objets à façonner.

Ainsi, les films et filaments subissent généralement un étirage en vue d'augmenter leur résistance. Par ailleurs, les films peuvent être découpés en bandelettes avant l'étirage.

La présence d'eau perturbe cet étirage et occasionne de fréquentes ruptures de ces filaments et bandelettes.

Par ailleurs, l'entraînement de l'eau de refroidissement par des feuilles ou des tubes extrudés engendre des défauts de surface dans les premières et provoque un retrait irrégulier et une composition hétérogène des seconds.

Ces inconvénients ont, jusqu'à présent, fait préférer l'air à l'eau pour les traitements de trempe des objets extrudés (H. Hagen et H. Domininghaus, Polyäthylen und andere Polyolefinen 1961, page 162 et Extrudierte Feinfolien und Verbundfolien (1976), VDI—Verlag, pages 18—19).

Pour pouvoir néanmoins exploiter de manière satisfaisante la trempe des objets extrudés au moyen d'eau, on a tenté de remédier aux inconvénients causés par l'entraînement d'eau de refroidissement par l'objet extrudé. Les tentatives dans ce sens on principalement résidé dans la recherche d'additifs qui auraient supprimé, ou à tout le moins réduit, l'entraînement d'eau par les objets extrudés à partir des compositions à base de polyoléfines, mais elles n'ont jamais conduit à des résultats tout à fait satisfaisants; il n'a pas été possible, en effet, de réduire de cette manière l'entraînement d'eau par les objets extrudés à grande vitesse, sans nuire aux autres propriétés essentielles de ces objets, telles que la stabilité, la coloration et l'action anti-corrosive.

D'autre part, l'incorporation, dans des compositions polyoléfiniques destinées à être extrudées, de composés bien connus pour leur action bénéfique sur la coloration et l'odeur du polymère lors du moulage et pour leur action anti-corrosive, tels que, par exemple, le stéarate de calcium, décrite dans le brevet GB—A—826748 (Farbwerke Hoechst), ne contribue nullement à réduire l'entraînement d'eau par les objets extrudés à grande vitesse.

La Demanderesse a trouvé à présent que certaines compositions à base de polymères d'alpha-oléfines permettent de fabriquer des objets par extrusion suivie de refroidissement à l'eau, sans que cette dernière soit entraînée, même pour des vitesses d'extrusion élevées, et sans nuire aux autres propriétés essentielles des objets extrudés.

La présente invention concerne donc l'utilisation, pour l'extrusion suivie d'un refroidissement à l'eau de l'extrudat, de compositions à base de polymères d'alpha-oléfines comprenant:

(a) au moins un anti-oxydant phénolique;

(b) au moins un phosphite organique;

(c) au moins un carbonate d'un métal alcalino-terreux.

A cet égard, il convient de mentionner que l'on avait déjà décrit antérieurement (brevet FR—A—1296276) de SHELL INT. RES. MIJ.) des compositions à bas de polyoléfines (polyéthylène) additionnées d'au moins 10% en poids d'une charge inorganique recouverte d'une couche d'un acide gras supérieur ou d'un sel ou ester de ce dernier (page 4, RESUME). On améliorerait ainsi notablement la résistance à la fissuration sous tension du polyéthylène sans diminution appréciable de son allongement à la rupture (page 1, col d, dernier paragraphe à page 2, col. g. ligne 13).

Le brevet FR—A—1345203 (de SHELL INT. RES. MIJ). mentionne, lui, que l'addition aux polyoléfines de la combinaison de composés organiques soufrés et phosphorés et d'une base organique ou inorganique conférerait à ces polyoléfines une bonne stabilisation à la chaleur et à la lumière (page 1, col. d, dernier paragraphe).

La proportion de base est comprise entre 0,1 et 5% environ, par exemple entre 0,3 et 1% environ (page 3, col. d, lignes 4 à 7).

Enfin, le brevet US—A—2985617 (MONSANTO CHEMICAL CO) mentionne que les stabilisants du polychlorure de vinyle conviennent pour stabiliser les polyoléfines fabriquées à l'intervention de

2

catalyseurs Ziegler (colonne 4, lignes 49 à 54). Certaines grandes classes de stabilisants sont préférés; les organo-étains, les organo-plombs, les sels de métaux alcalinoterreux et d'acides carboxyliques gras à longues chaînes, et les composés époxydés (colonne 4, lignes 60 à 72).

Ces documents ne font mullement mention de problème de l'entraînement d'eau par des extrudats constitués des compositions qu'elles décrivent et ne peuvent donc suggérer sa solution. L'addition de carbonates selon ces documents est effectuées dans des buts fondamentalement différents de ceux poursuivis par la présente invention. Ces carbonates, ainsi que la multitude d'autres composés qui répondent aux définitions figurant dans ces documents, exercent des fonctions totalement différentes de celle exercée par le carbonate alcalino-terreux selon l'invention.

Les polymères d'alpha-oléfines entrant dans les compositions utilisables selon l'invention sont des polymères contenant au moins 50% molaires et de préférence au moins 75% molaires d'oléfines à insaturation terminale dont la molécule contient de 2 à 18 et de préférence de 2 à 6 atomes de carbone telles que l'éthyléne, le propylène, le butène-1, le pentène-1, les méthylbutènes-1, l'hexène-1, les 3- et 4-méthylpentènes-1 et le vinylcyclohexane. Il s'agit plus particulièrement de polymères contenant des atomes de carbone tertiaire tels que les polymères cristallins fortement isotactiques du butène-1, du 4-méthylpentène-1, et tout particulièrement, du propylène.

Il peut s'agir également de copolymères de ces alpha-oléfines entre elles et/ou avec des dioléfines comprenant de 4 à 18 atomes de carbon, telles que des dioléfines aliphatiques non conjuguées comme par exemple l'hexadiène-1,4 ou telles que des dioléfines alicycliques ayant un pont endocyclique comme le dicyclopentadiène par exemple.

Il peut s'agir enfin de copolymères appelés à blocs qui consistent en des successions de segments de chaîne à longueurs variables, chaque segment étant constitué d'un homopolymère d'une alpha-oléfine ou d'un copolymère statistique comprenant une alpha-oléfine et au moins un comonomère choisi parmi les alphaoléfines et les dioléfines.

Les meilleurs résultats sont obtenus avec les polymères contenant au moins 50 % en poids et de préférence au moins 75% en poids de propylène.

Les compositions utilisables selon l'invention peuvent aussi être à base de mélanges de deux ou plusieurs polymères tels que décrits ci-dessus.

Les polymères utilisables peuvent être préparés selon les méthodes connues de polymérisation des alpha-oléfines à basse pression. En particulier, les homopolyméres cristallins fortement isotactiques du propylène peuvent être préparés en présence de systèmes catalytiques stéréospécifiques à base de composés organométalliques et de chlorures de titane se trouvant à une valence inférieure à sa valence maximale.

Les compositions utilisables selon l'invention comprennent au moins un constituant (a) qui est un anti-oxydant phénolique quelconque. Cet antioxydant peut être choisi advantageusement dans le group des mono-, poly- et thiobis-phénols alkylés.

A titre d'exemples de monophénols alkylés, on peut citer le 2,6-di-tert-butyl-p-crésol et le (3,5-di-tert-butyl-4-hydroxyphényl) propionate de n-octa-décyle.

A titre d'exemples de polyphénols alkylés, on peut citer le tétrakis méthylène (3,5-di-tert-butyl-4-hydroxy)dihydrocinnamate méthane, le téréphtalate de 2,2'-méthylène bis(4-méthyl-6-tert-butylphénol), le 2,6-bis-(2'-hydroxy-3-tert-butyl-5'-méthylbenzyl)-4-méthylphénol et l'isocyanurate de tris-(3,5-di-tert-butyl-4-hydroxy)benzyle.

Les compositions utilisables selon l'invention peuvent également comprendre un mélange des anti-oxydants phénoliques énumérés ci-dessus.

Les compositions utilisables suivant l'invention comprennent au moins un constituant (b) qui est un phosphite organique. L'incorporation de constituant (b) a pour résultat principal d'accroître l'efficacité des antioxydants phénoliques mentionnés ci-dessus. Ce phosphite organique est choisi avantageusement parmi les phosphites et thiophosphites de formules générale $(RO)_3P$ et $(RS)_3P$ dans lesquelles les radicaux R, identiques ou différents représentent un radical alkyle, aryle, alkylaryle, cycloalkyle, ou alkoxyalkyle et parmi les phosphites cycliques dérivés du pentaérythritol.

Des exemples de phosphites organiques répondant à ces définitions figurent dans le brevet Etats-Unis 3 039 993 au nom de Weston Chemical.

Des phosphites préférés comme constituants (b) sont, d'une part, les trialkylphosphites tels que les triéthyl-, tributyl- et trinonylphosphites par exemple et, d'autre part, les diphosphites de dialkylpentaérythritol, tels que le diphosphite de distéarylpentaérythritol par exemple. Des mélanges de ces phosphites peuvent également être avantageusement utilisés.

Les compositions utilisées conformément à l'invention comprennent enfin au moins un constituant (c) qui est un carbonate d'un métal alcalinoterreux. Tous les carbonates de métaux alcalino-terreux conviennent comme constituants (c). On peut citer par exemple les carbonates de magnésium, de calcium, de strontium et de baryum. On préfère toutefois utiliser le carbonate de calcium, et en particulier les carbonates de calcium se trouvant sous la forme de particules de diamètre moyen inférieur à 10 microns. Les carbonates de calcium dits "précité", c'est-à-dire les carbonates de calcium obtenus par carbonatation d'un lait de chaux, conviennent bien.

La Demanderesse a en effet constaté avec surprise que l'incorporation de ces carbonates dans les

3

compositions utilisées conformément à l'invention réduit de la façon la plus efficace l'entraînement d'eau par les objets extrudés à partir de ces compositions.

On peut également incorporer aux compositions des mélanges des carbonates définis ci-dessus.

Les constituants (a) et (b) sont incorporés dans les compositions utilisés conformément à l'invention dans les quantités stabilisantes habituelles. Ces quantités sont généralement comprises entre 0,005 et 10 % en poids du polymère entrant dans la composition et de préférence entre 0,01 et 5%. Plus particulièrement, ces quantités sont de l'ordre de 0,05 à 0,5%.

Le constituant (c) est incorporé dans les compositions à raison de 0,1 à 50% (pour mille) en poids du polymère environ, de préférence à raison de 0,1 à 10 %.

Les meilleurs résultats sont obtenus avec des quantités du constituant (c) d'environ 0,2 à 0,3 %.

Pour pouvoir incorporer facilement, et de manière homogène, ce dernier constituant dans les compositions utilisables selon l'invention, on préfère que le diamètre moyen de ses particules soit une fraction de micron. Plus particulièrement, les particules ont un diamètre moyen compris entre 0,05 et 0,8 microns. On a constaté en effet que si la grosseur des particules de constituant (c) est plus élevée, cela entraîne, dans le cas de l'extrusion de films découpés en bandelettes, une usure rapide des lames de découpe.

Outre le polymère et les constituants (a), (b) et (c), les compositions utilisables selon l'invention peuvent contenir d'autres additifs usuels tels que, par exemple, d'autres anti-oxydants tels que les thioesters généralement dérivés de l'acide thiodipropionique, d'autres polymères, des agents facilitant la mise en oeuvre, des agents renforçants, des pigments, charges, lubrifiants, agents anti-statiques, etc.

Les constituants (a), (b) et (c) peuvent être incorporés au polymère de toute façon connue en soi, par exemple par mélange à sec ou encore en imprégnant le polymère en poudre ou en granules au moyen d'une solution des constituants dans un solvant approprié, seuls ou en charge type avec d'autres ingrédients, ou encore en mélangeant une solution ou une suspension du polymère avec une solution des constituants.

L'incorporation peut être réalisée par exemple, soit dans un mélangeur ou un broyeur où le solvant est évaporé, soit par malaxage sur des cylindres chauffés ou par extrusion d'un mélange du polymère et des autres constituants.

L'extrusion des compositions utilisables selon l'invention peut être effectuée selon toutes les techniques conventionnelles connues de l'home de métier.

Les caractéristiques de l'appareillage seront évidemment choisies en fonction de la transformation que l'on souhaite faire subir à la composition à extruder et du type d'objet que l'on compte façonner. Quant au traitement de refroidissement ou de trempe au moyen d'eau, il est effectué à une température qui dépend de la nature de l'objet extrudé et des propriétés que l'on compte conférer à ce dernier.

Par exemple, dans le cas de l'extrusion, à partir de compositions à base de polymères du propylène, de films destinés à être découpés en bandelettes, la température du bain de trempe du film primaire est généralement comprise entre environ 20 et environ 50°C.

L'utilisation pour l'extrusion des compositions selon l'invention apporte donc une solution élégante au problème de l'entraînement d'eau, par ces compositions, lorsqu'elles sont refroidies à l'eau. En outre, l'utilisation, faisant l'objet de l'invention, des compositions décrites plus haut, permet, de façon suprenante, d'assurer un excellent compromis entre la suppression de l'entraînement d'eau même à vitesse d'extrusion élevée, la coloration initiale et l'efficacité anti-corrosion, compromis qui n'est pas réalisé avec les compositions de l'art antérieur. En outre, les compositions préférées utilisables selon l'invention contiennent du carbonate de calcium "précité" en particules de diamètre moyen de l'ordre de la fraction de micron, ne salissent pas la filière de l'extrudeuse; lors de l'extrusion de films qui sont découpés en bandelettes, elles ne provoquent pas une usure prématurée de couteaux de découpe.

L'invention est illustrée par les exemples illustratifs et non limitatifs ci-après.

Exemple 1

On prépare une composition extrudable par mélange à sec des constituants suivants:

—1000 parties en poids d'un homopolymère cristallin du propylène;

—0,3 parties en poids de téréphtalate de 2,2'-méthylène-bis(4-méthyl-6-tert-butylphénol) vendu sous la dénomination HPM 12 par Organosynthèse;

—0.2 parties en poids de diphosphite de distéarylpentaérythritol vendu sous la marque WESTON 618 par Borg-Warner;

—1 partie en poids de trinonylphosphite vendu par Rhône-Poulenc;

—0,3 partie en poids de carbonate de calcium "précipité" vendu sous la marque SOCAL U1 par Solvay.

Cette composition granulée est extrudée ensuite sous forme d'un film de 100 microns d'épaisseur environ. Ce film est refroidi par passage dans un bain d'eau à température ambiante (25°C) et découpé ensuite en bandelettes qui sont étirées, à un taux d'étirage de 1/6 environ dans un four d'étirage porté à une température de 150—180°C.

On constante que ces bandelettes n'entraînent pas d'eau, même lorsque la vitesse d'extrusion du film primaire atteint 40 m/min. En outre, leur découpage n'entraîne pas une usure prématurée des couteaux.

Enfin, on constate que les compositions extrudées ne corrodent pas l'appariellage de mise en oeuvre.

4

Exemple 2

On prépare une composition extrudable comme à l'exemple 1, sauf que l'on utilise:
— 1 partie en poids de (3,5-di-tert-butyl-4-hydroxyphényl)propionate de n-octa-décyle vendu sous la dénomination Irganox 1076 par Ciba-Ceigy, au lieu de HPM 12;
— 0,2 partie en poids de SOCAL U1.

Cette composition est transformée en bandelettes comme indiqué à l'exemple 1. Ces bandelettes manifestent les mêmes propriétés que celles constatées pour les bandelettes de l'exemple 1.

Exemple 3

On prépare une composition extrudable comme à l'exemple 1, sauf que l'on utilise, outre le polymère du propylène:
— 0,25 partie en poids de tétrakis[méthylène (3,5-di-tert-butyl-4-hydroxy) dihydrocinnamate]méthane vendu sous la dénomination Irganox 1010 par Ciba-Geigy;
— 0,75 partie en poids d'Irganox 1076; .
— 1,5 partie en poids de trinonylphosphite;
— 0,2 partie en poids de SOCAL U1.

On observe une fois encore, sur les bandelettes obtenues de la manière décrite à l'exemple 1, les mêmes propriétés avantageuses.

Exemple 4

Cet exemple est donné à titre comparatif.

On prépare une composition extrudable comme à l'exemple 3, sauf que le SOCAL U1 est remplacé par 0,5 partie en poids de stéarate de calcium. Lorsqu'on fabrique des bandelettes, comme décrit à l'exemple 1, à partir de ces compositions, le phénomène d'entraînement d'eau se présente déjà pour des vitesses d'extrusion aussi faibles que 12 m/min.

**Revendications**

1. Utilisation, pour l'extrusion suivie d'un refroidissement à l'eau de l'extrudat, de compositions à base de polymères d'alpha-oléfines comprenant:
(a) au moins un anti-oxydant phénolique;
(b) au moins un phosphite organique;
(c) au moins un carbonate d'un métal alcalino-terreux.

2. Utilisation suivant la revendication 1, caractérisé en ce que le polymère d'alpha-oléfine est un polymère du propylène.

3. Utilisation suivant la revendication 1 ou 2, caractérisé en ce que l'anti-oxydant phénolique est choisi parmi les mono-, les poly-, et les thiobisphénols alkylés.

4. Utilisation suivant l'une quelconque des revendications 1 à 3, caractérisé en ce que le phosphite organique est choisie parmi les trialkylphosphites et les diphosphites de dialkylpentaérythritol.

5. Utilisation suivant l'une quelconque des revendications 1 à 4, caractérisé en ce que le carbonate de métal alcalino-terreux est le carbonate de calcium.

6. Utilisation suivant la revendication 5, caractérisé en ce que le carbonate de calcium est sous la forme de particules dont le diamère moyen est inférieur à 10 microns.

7. Utilisation suivant l'une quelconque des revendications 1 à 6, caractérisée en ce que le carbonate de métal alcalino-terreux est incorporé dans les compositions à raison de 0,1 à 10 pour mille en poids du polymère.

8. Utilisation suivant l'une quelconque des revendications 1 à 7, caractérisée en ce que le carbonate de métal alcalino-terreux est sous la forme de particules de diamère moyen compris entre 0,05 et 0,8 microns.

9. Utilisation suivant l'une quelconque des revendications 1 à 8, caractérisée en ce qu'elle est appliquée à la fabrication de films.

10. Utilisation suivant la revendication 9, caractérisé en ce que les films sont découpés en bandelettes.

**Patentansprüche**

1. Verwendung für die Extrusion gefolgt von einer Abkühlung in Wasser des Extrudats, von Zusammensetzungen auf der Basis von alpha-Olefinpolymeren, enthaltend:
a) mindestens ein phenolisches Antioxydationsmittel,
b) mindestens ein organisches Phosphit,
c) mindestens ein Carbonat eines Erdalkalimetalls.

2. Verwendung nach Anspruch 1, dadurch gekennzeichnet, daß das alpha-Olefinpolymer ein Propylenpolymer ist.

3. Verwendung nach Anspruch 1 oder 2, dadurch gekennzeichnet, daß das phenolische Antioxydationsmittel ausgewählt wird unter den alkylierten Mono-, Poly- und Thiobisphenolen.

4. Verwendung nach einem der Ansprüche 1 bis 3, dadurch gekennzeichnet, daß das organische Phosphit ausgewählt wird unter den Trialkylphosphiten und den Diphosphiten von Dialkylpentaerythrit.

5. Verwendung nach einem der Ansprüche 1 bis 4, dadurch gekennzeichnet, daß das Erdalkalimetallcarbonate Kalziumcarbonat ist.

6. Verwendung nach Anspruch 5, dadurch gekennzeichnet, daß das Kalziumcarbonate in Form von Partikeln vorliegt, deren mittlerer Durchmesser geringer als 10 Mikron ist.

7. Verwendung nach einem der Ansprüche 1 bis 6, dadurch gekennzeichnet, daß das Erdalkalimetallcarbonat in einem Verhältnis von 0,1 bis 10 pro Tausend bezogen auf das Gewicht des Polymers in die Zusammensetzung eingearbeitet wird.

8. Verwendung nach einem der Ansprüche 1 bis 7, dadurch gekennzeichnet, daß das Erdalkalimetallcarbonat in der Form von Teilchen mit einem mittleren Durchmesser zwischen 0,05 und 0,8 Mikron vorliegt.

9. Verwendung nach einem der Ansprüche 1 bis 8, dadurch gekennzeichnet, daß sie auf die Herstellung von Folien angewendet wird.

10. Verwendung nach Anspruch 9, dadurch gekennzeichnet, daß die Folien zu Bändchen geschnitten werden.

## Claims

1. Use, for extrusion followed by water-cooling of the extrudate, of compositions which are based on alpha-olefine polymers and contain:
   (a) at least one phenolic antioxdant,
   (b) at least one organic phosphite and
   (c) at least one alkaline earth metal carbonate.

2. Use according to Claim 1, characterised in that the alpha-olefine polymer is a propylene polymer.

3. Use according to Claim 1 or 2, characterised in that the phenolic antioxidant is chosen from among alkylated monophenols, polyphenols and thiobisphenols.

4. Use according to any one of Claims 1 to 3, characterised in that the organic phosphite is chosen from among trialkyl phosphites and dialkylpentaerythritol diphosphites.

5. Use according to any one of Claims 1 to 4, characterised in that the alkaline earth metal carbonate is calcium carbonate.

6. Use according to Claim 5, characterised in that the calcium carbonate is in the form of particles of mean diameter less than 10 microns.

7. Use according to any one of Claims 1 to 6, characterised in that the alkaline earth metal carbonate in incorporated into the compositions in an amount of 0.1 to 10 parts per thousand, by weight of the polymer.

8. Use according to any one of Claims 1 to 7, characterised in that the alkaline earth metal carbonate is in the form of particles of mean diameter between 0.05 and 0.8 micron.

9. Use according to any one of Claims 1 to 8, characterised in that it is applied to the manufacture of films.

10. Use according to Claim 9, characterised in that the films are cut into tapes.